# FASCICULE DE BREVET EUROPEEN

(11) **EP 2 451 656 B1**
(45) Date de publication et mention de la délivrance du brevet: **25.11.2015**
(21) Numéro de dépôt: 10730178.0
(22) Date de dépôt: 08.07.2010
(51) Int. Cl.: B60C 1/00, C08K 5/29, C08L 7/00

(54) **composition à base de caoutchouc naturel et d'un composé polyimine**
Zusammensetzung auf der Basis von Naturkautschuk und Polyiminverbindung
composition based on natural rubber and a polyimine compound

(30) Priorité: 10.07.2009 FR 0903436
(43) Date de publication de la demande: 16.05.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: ARAUJO DA SILVA, José Carlos, F-63430 Pont du Chateau (FR); BELZ, Justin, F-63200 Riom (FR)
(74) Mandataire: Le Cam, Véronique Marie Christine
(86) Numéro de dépôt international: PCT/EP2010/059828
(87) Numéro de publication internationale: WO 2011/003982

(56) Documents cités:
- JP-A- 2 117 939
- JP-A- 2006 063 206
- US-A1- 2008 154 020

## Description

La présente invention se rapporte à des compositions de caoutchouc renforcées à base de caoutchouc naturel comportant au moins un composé poly-imine possédant des propriétés hystérétiques améliorées à l'état vulcanisé. Ces compositions de caoutchouc sont destinées par exemple à la fabrication d'un produit semi- fini en caoutchouc destiné aux pneumatiques des véhicules terrestres et aériens.

Depuis que les économies de carburant et la nécessité de protéger l'environnement sont devenues une priorité, il s'est avéré nécessaire de produire des pneumatiques ayant une résistance au roulement aussi faible que possible, sans pénalisation de leur résistance à l'usure. Ceci a été rendu possible notamment grâce à l'utilisation, dans les compositions de caoutchouc, de charges inorganiques spécifiques, capables de rivaliser du point de vue renforçant avec une charge organique tel que le noir de carbone conventionnel de grade pneumatique, tout en offrant à ces compositions une hystérèse plus faible, synonyme d'une plus basse résistance au roulement pour les pneumatiques les comportant.

Diminuer davantage la résistance au roulement demeure dans le contexte économique et écologique actuel un souci permanent malgré les bas niveaux atteints respectivement tant avec les charges inorganiques spécifiques qualifiées de "renforçantes" qu'avec un noir de carbone. De nombreuses pistes ont déjà été explorées pour abaisser encore l'hystérèse des compositions de caoutchouc renforcées avec de telles charges renforçantes. On peut citer, à titre d'exemple, la modification de la structure des polymères synthétiques diéniques en fin de polymérisation au moyen d'agents de fonctionnalisation, de couplage ou d'étoilage dans le but d'obtenir une bonne interaction entre le polymère ainsi modifié et la charge renforçante. On peut également citer la demande de brevet WO 96/37547A1 décrivant une composition de caoutchouc utilisant à titre de charge renforçante du noir de carbone avec de la silice fixée sur sa surface, à base d'un polymère diénique fonctionnalisé ou non et d'un agent de recouvrement et de couplage silane en quantité relativement élevée.

Il est souhaitable que la faible hystérèse des compositions ayant une résistance au roulement réduite et une bonne résistance à l'usure reste la plus faible possible durant la vie des pneumatiques les comportant, c'est-à-dire que son évolution, notamment due à une thermo-oxydation ou à un auto-échauffement de la composition de caoutchouc par rapport à la valeur de l'hystérèse initiale soit minimale et la plus lente possible.

La demande de brevet JP2006063206A1 divulgue l'adjonction de poly-imines pour améliorer la résistance à l'abrasion de compositions à base de caoutchoucs naturels ou synthétiques contenant une charge inorganique en tant que charge renforçante unique ou majoritaire ou en coupage avec du noir de carbone présent en quantité minoritaire et un agent de couplage silane sans significativement détériorer les propriétés d'allongement et viscoélastiques de la composition.

Les inventeurs ont découvert lors de leurs recherches que dans une composition de caoutchouc à base de caoutchouc naturel comme élastomère principal et renforcée soit avec une charge organique telle que du noir de carbone, soit avec une charge inorganique renforçante telle que la silice ou encore un coupage de charges organique(s) et inorganique(s), l'adjonction de certains composés poly-imines confère à ces compositions vulcanisées des propriétés de caoutchouterie, en particulier des propriétés hystérétiques, améliorées, notamment confère une moindre dégradation de l'hystérèse dans le temps. Cette amélioration significative et pérenne dans le temps de l'hystérèse dans les proportions observées dans le cadre des compositions selon l'invention comportant un composé poly-imine est pour le moins inattendue par rapport à l'évolution dans le temps de l'hystérèse exhibée par une telle composition dépourvue de composé poly-imine.

Les propriétés hystérétiques significativement améliorées dans le temps de telles compositions conformes à l'invention à base de caoutchouc naturel et d'un composé poly-imine, rendent ces dernières particulièrement adaptées à la fabrication de produits semi-finis en caoutchouc destinés aux pneumatiques, notamment de véhicules terrestres à moteur, tels que des sous-couches, des gommes d'enrobage de renforts métalliques ou textiles, des gommes de flancs ou des bandes de roulement.

Ainsi, un objet de la présente invention est une composition de caoutchouc renforcée à base au moins d'une matrice élastomérique comprenant du caoutchouc naturel (NR), une charge renforçante organique ou inorganique ou un coupage des deux, un agent de couplage en cas d'utilisation d'une charge inorganique et un composé poly-imine répondant aux formules 1 ou 2 suivantes: 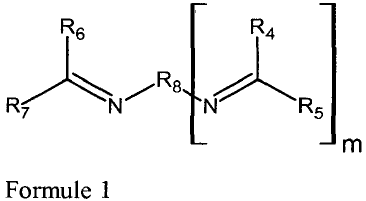 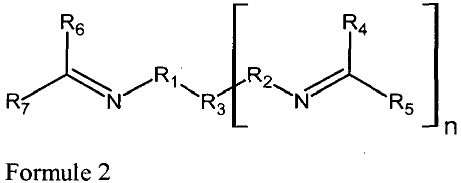 dans lesquelles :
- R₄, R₅, R₆, R₇, identiques ou différents, sont choisis parmi les groupements alkyls ayant de 1 à 20 atomes de carbone, cycloalkyls ayant de 5 à 24 atomes de carbone, aryls ayant de 6 à 18 atomes de carbone ou aralkyls ayant de 7 à 25 atomes de carbone;
- R₁, R₂, identiques ou différents, sont choisis dans le groupe constitué par les alkylidènes ayant de 1 à 20 atomes de carbone, les cycloalkylidènes ayant de 5 à 24 atomes de carbone, les arylidènes ayant de 6 à 18 atomes de carbone, les aralkylidènes ayant de 7 à 25 atomes de carbone et les hétérocycles, identiques ou différents, ayant de 4 à 25 atomes de carbone;
- R₃, R₈, identiques ou différents, sont choisis dans le groupe constitué par les alkylidènes ayant de 1 à 20 atomes de carbone, les alkylidynes ayant de 1 à 20 atomes de carbone, les alkylylidynes ayant de 1 à 20 atomes de carbone, les cycloalkylidènes ayant de 5 à 24 atomes de carbone, les cycloalkylidynes ayant de 5 à 24 atomes de carbone, les cycloalkylylidynes ayant de 5 à 24 atomes de carbone, les arylidènes ayant de 6 à 18 atomes de carbone, les arylidynes ayant de 6 à 18 atomes de carbone, les arylylidynes ayant de 6 à 18 atomes de carbone, les aralkylidènes ayant de 7 à 25 atomes de carbone, les aralkylidynes ayant de 6 à 18 atomes de carbone, les aralkylylidynes ayant de 6 à 18 atomes de carbone, et les hétérocycles, identiques ou différents, ayant de 4 à 25 atomes de carbone;
- R₃ comporte éventuellement un ou plusieurs hétéroatome(s) choisi(s) parmi O, N, S et Si.
- m est égal à 1, 2 ou 3
- n est égal à 1, 2 ou 3

Un autre objet de l'invention est un procédé de préparation d'une telle composition de caoutchouc renforcée définie plus haut.

L'invention a également pour objet un produit semi-fini en caoutchouc pour pneumatique constitué en tout ou partie de la composition de caoutchouc renforcée définie plus haut.

Un autre objet de l'invention est un pneumatique comprenant au moins un produit semi-fini en caoutchouc constitué en tout ou partie de la composition de caoutchouc renforcée telle que définie plus haut.

Pour plus de clarté à la lecture de ce qui va suivre, on entend par l'expression composition "à base de", une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par ailleurs, les quantités des composants de l'invention peuvent être exprimés en pce, c'est-à-dire en partie (en poids) pour cent parties en poids d'élastomère. Ainsi un premier objet de l'invention est une composition de caoutchouc renforcée à base au moins (a) d'une matrice élastomérique comprenant au moins du caoutchouc naturel à titre majoritaire, (b) d'une charge renforçante et (c) d'un composé poly-imine répondant aux formules 1 ou 2 suivantes: 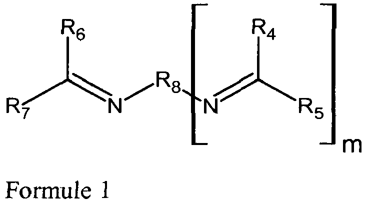 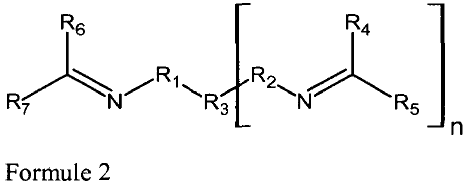 dans lesquelles :
- R₄, R₅, R₆, R₇, identiques ou différents, sont choisis parmi les groupements alkyls ayant de 1 à 20 atomes de carbone, cycloalkyls ayant de 5 à 24 atomes de carbone, aryls ayant de 6 à 18 atomes de carbone ou aralkyls ayant de 7 à 25 atomes de carbone;
- R₁, R₂, identiques ou différents, sont choisis dans le groupe constitué par les alkylidènes ayant de 1 à 20 atomes de carbone, les cycloalkylidènes ayant de 5 à 24 atomes de carbone, les arylidènes ayant de 6 à 18 atomes de carbone, les aralkylidènes ayant de 7 à 25 atomes de carbone et les hétérocycles, identiques ou différents, ayant de 4 à 25 atomes de carbone;
- R₃, R₈, identiques ou différents, sont choisis dans le groupe constitué par les alkylidènes ayant de 1 à 20 atomes de carbone, les alkylidynes ayant de 1 à 20 atomes de carbone, les alkylylidynes ayant de 1 à 20 atomes de carbone, les cycloalkylidènes ayant de 5 à 24 atomes de carbone, les cycloalkylidynes ayant de 5 à 24 atomes de carbone, les cycloalkylylidynes ayant de 5 à 24 atomes de carbone, les arylidènes ayant de 6 à 18 atomes de carbone, les arylidynes ayant de 6 à 18 atomes de carbone, les arylylidynes ayant de 6 à 18 atomes de carbone, les aralkylidènes ayant de 7 à 25 atomes de carbone, les aralkylidynes ayant de 6 à 18 atomes de carbone, les aralkylylidynes ayant de 6 à 18 atomes de carbone, et les hétérocycles, identiques ou différents, ayant de 4 à 25 atomes de carbone;
- R₃ comporte éventuellement un ou plusieurs hétéroatome(s) choisi(s) parmi O, N, S et Si.
- m est égal à 1, 2 ou 3
- n est égal à 1, 2 ou 3

A titre de composés poly-imines sont utilisés préférentiellement les composés di-imines, tri-imines et tétra-imines. Ces composés et leur procédé de préparation sont décrits dans l'état de la technique soit pour améliorer la résistance à l'abrasion de compositions de caoutchouc destinées à la fabrication de pneumatiques pour véhicules et on peut citer à cet égard la demande de brevet JP2006063206A1 précitée soit pour la préparation de résines selon le procédé décrit dans le brevet US3.668.183.

Les composés poly-imines peuvent par exemple, comme connu en soi, être synthétisés en condensant une amine sur une cétone. Ce mode de préparation d'imines est décrit dans « Advanced Organic Chemistry, Part B : Reactions and Synthesis » par F. A. Carey et R. J. Sundberg, 4th Edition, p 31-33, ainsi que dans « Advanced Organic Chemistry, Reactions, Mechanisms, and Structure » par J. March, 5th Edition, p 1185-1187 et dans les références citées par ces ouvrages.

Les amines utilisées pour la synthèse des produits répondant à la formule 1 peuvent être par exemple :
1,2-propylènediamine, 3,3'-diméthyl-4,4'-diamino-dicyclohexylméthane, 4,4'-diaminodicyclohexylméthane, isophore diamine, néopentanediamine (2,2-diméthylpropane-1,3-diamine), 1,8-octaméthylènediamine, 4,4'-méthylènedianiline molten, ethylènediamine, 1,3-diaminopropane, 1,6-hexaméthylènediamine, 1,4-phénylènediamine, 1,3-phénylènediamine, 1,2-phénylènediamine, 1,2-diaminocyclohexane, 1,3-diaminocyclohexane, 1,4-diaminocyclohexane, 1,3-diamino-4-méthylbenzene et préférentiellement 1,8-octaméthylènediamine, 1,6-hexaméthylènediamine, 1,2-diaminocyclohexane, 1,4-diaminocyclohexane.

Les amines utilisées pour la synthèse des produits répondant à la formule 2 peuvent être par exemple :
4,7,10-trioxatridécane-1,13-diamine, 4,9-dioxadodécane-1,12-diamine, diéthylènetriamine, N-3-amine-(3-(2-aminoéthylamino)propylamine), dipropylène triamine, N,N-Bis-(3-aminopropyl)méthylamine, N-4-amine-(N,N'-Bis-(3-aminopropyl)-ethylènediamine), 2,4-diamino-6-méthyl-1,3,5-triazine, 2,4-diamino-6-phényl-s-triazine, mélamine, triéthylènetétramine, tétraéthylènepentamine, 2,2',2"-nitrilotriéthylamine 3,6-dioxaoctane-1,8-diamine, N,N,N-tris(2-aminoéthyl)amine, bis (3-aminopropyl)tetramethyldisilo xane, 2-(2-aminoéthoxy)éthanamine, 3- {2-[2-(3-aminopropoxy)ethoxy]ethoxy}propan-1-amine, 3-[4-(3-aminopropoxy)phenoxy]propan-1-amine, 3-{2-(3-aminopropoxy)-1-[(3-aminopropoxy)methyl]ethoxy}propan-1-amine, 2-({2-[(2-aminophenyl)thio]éthyl}thio) aniline, 2-[(3-{[(2-aminophényl)thio]méthyl}-2,4,6-triméthylbenzyl)thio]aniline, 2-({4-[(2-aminophényl)thio]but-2-enyl}thio)aniline et préférentiellement la N,N-bis(2-aminoethyl)ethane-1,2-diamine.

Les cétones utilisées pour la synthèse des produits revendiqués dans les formules 1 ou 2 peuvent être par exemple :
Pentan-3-one, 2,2,6,6-tetraméthylcyclohexanone, 2,2,4,4-tétraméthyl-3-pentanone, 4-methylpentan-2-one, 2,4-dimethylpentan-3-one, 2,6-dimethylheptan-4-one, cyclohexanone, acétone, 2,6-diméthylcyclohexanone, 2,2,4,4-tetramethylpentan-3-one, (1,1',3',1")ter(cyclohexan)-2'-one, dicyclohexylmethanone, dicyclopentylmethanone, cyclopentanone, bicyclo[3.3.1]nonan-9-one, dicyclopropylmethanone, 2,6-di-tert-butyl-cyclohexanone, 2,6-diméthylcyclohexanone, 2,4-diméthyl-3-pentanone et préférentiellement 4-methylpentan-2-one, 2,4-dimethylpentan-3-one, 2,6-dimethylheptan-4-one, cyclohexanone, cyclopentanone.

Selon la présente invention, les composés poly-imines répondant aux formules 1 ou 2 sont de préférence choisis parmi ceux pour lesquels R₄, R₅, R₆ et R₇ sont chacun un radical hydrocarboné choisi parmi les radicaux alkyls linéaires ou ramifiés, non substitués, ayant 1 à 4 atomes de carbone et avantageusement R₄ et R₆ sont chacun un radical méthyl, R₅ et R₇ sont chacun un radical isobutyl ou les ensembles respectifs « R₄, R₅ » ou « R₆, R₇ » représentent un radical cycloalkyl ayant 5 ou 6 atomes de carbone, R₁, R₂ et R₈ sont chacun un radical alkylidène linéaire ou ramifié, non substitué, ayant de 2 à 8 atomes de carbone ou un radical cycloalkylidène ayant 6 atomes de carbone et R₃ est un radical alkylidène non substitué ayant de 2 à 8 atomes de carbone ou un radical alkylidène ayant de 2 à 6 atomes de carbone comportant N comme hétéroatome.

Plus préférentiellement, ces composés poly-imines sont choisis parmi les N,N' -Bis(4-methylpentan-2-ylidene)hexane-1,6-diamine, N,N'-Bis(2,6-dimethylheptan-4-ylidene)hexane-1,6-diamine, N,N'-Bis(2,4-dimethylpentan-3-ylidene)hexane-1,6-diamine, N,N' -Bis(4-methylpentan-2-ylidene)octane-1,8-diamine, N,N'-Bis(2,6-dimethylheptane-4-ylidene)octane-1,8-diamine, N,N'-Bis(2,4-dimethylpentan-3-ylidene)octane-1,8-diamine, N,N'-dicyclopentylidenehexane-1,6-diamine, N,N'-dicyclopentylideneoctane-1,8-diamine, N,N'-dicyclohexylidenehexane-1,6-diamine, N,N'-dicyclohexylideneoctane-1,8-diamine, N,N'-Bis(4-methylpentan-2-ylidene)cyclohexane-1,4-diamine, N,N'-Bis(4-methylpentan-2-ylidene)cyclohexane-1,2-diamine, N,N'-Bis(2,6-dimethylheptan-4-ylidene)cyclohexane-1,4-diamine, N,N'-Bis(2,6-dimethylheptan-4-ylidene)cyclohexane-1,2-diamine, N,N'-dicyclohexylidenecyclohexane-1,4-diamine, N,N'-dicyclohexylidenecyclohexane-1,2-diamine, N-(4-methylpentan-2-ylidene)-,N',N'-bis((4-methylpentan-2-ylideneamino)ethyl)ethane-1,2-diamine, N-(2,6-dimethylheptan-4-ylidene)-N',N'-bis(2-(2,6-dimethylheptan-4-ylideneamino)ethyl)ethane-1,2-diamine.

La composition de caoutchouc du composant de pneumatique selon l'invention comprend le composé poly-imine dans une quantité allant de 6 à 20 mmol pour 100g d'élastomère, de préférence allant de 6 à 16 mmol pour 100g d'élastomère, c'est-à-dire comprend un fort taux de composé poly-imine. Par "le composé poly-imine" selon l'invention, il faut comprendre un composé ou un mélange de plusieurs composés répondant aux formules 1 ou 2.

Selon l'invention, la matrice élastomérique de la composition est à base de caoutchouc naturel. Dans certains cas, la matrice élastomérique peut avantageusement être entièrement constituée de caoutchouc naturel (100% de la matrice élastomérique est constituée de caoutchouc naturel). Cette variante est préférentiellement mise en oeuvre lorsqu'il s'agit d'utiliser la composition de caoutchouc pour fabriquer des flancs, des bandes de roulement pour pneumatiques de véhicules utilitaires tels que Poids Lourds ou encore certaines applications, telles que glace ou neige, de véhicules tourismes, ou encore pour fabriquer des composites renfort métallique/caoutchouc, tels que par exemple les nappes sommets ou carcasse.

La fraction pondérale de caoutchouc naturel dans la matrice élastomérique perrt être supérieure ou égale à 50% en poids ou poids total de la matrice.

La matrice élastomérique peut également, outre le caoutchouc naturel, comprendre au moins un autre élastomère diénique.

Ce ou ces autres élastomères diéniques sont alors présents dans la matrice dans des proportions comprises entre 0 et 50 % en poids (les bornes de ce domaine étant exclues), préférentiellement de 5% à 40%, encore plus préférentiellement de 15% à 40%.

Dans le cas d'un coupage avec au moins un autre élastomère diénique, la fraction pondérale du caoutchouc naturel dans la matrice élastomérique est majoritaire et de préférence supérieure ou égale à 50% en poids du poids total de la matrice, encore plus préférentiellement de 60% à 85% en poids du poids total de la matrice.

On appelle fraction pondérale majoritaire selon l'invention la fraction pondérale la plus élevée du coupage. Ainsi, dans un coupage ternaire NR/élastomèreA/élastomère B, les fractions pondérales peuvent être réparties selon les proportions 45/30/25 ou 40/40/20 ou 40/30/30, les fractions pondérales majoritaires étant respectivement 45 ou 40 et dans un coupage binaire NR/élastomère, les fractions pondérales peuvent être réparties selon les proportions 50/50 ou 70/30, les fractions pondérales majoritaires étant 50 ou 70.

Par élastomère diéniques, doit être compris selon l'invention tout caoutchouc naturel, éventuellement fonctionnalisé, ou tout élastomère synthétique issu au moins en partie de monomères diènes. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques. Le caoutchouc naturel éventuellement fonctionnalisé est préférentiellement un caoutchouc époxydé.

L'élastomère diénique constituant une partie de la matrice élastomérique selon l'invention est choisi préférentiellement dans le groupe des élastomères diéniques fortement insaturés constitué par les polybutadiènes (BR), les copolymères de butadiène, les polyisoprènes (PI), les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprènestyrène (SIR) et les copolymères d'isoprène-butadiène-styrène (SBIR). Parmi ces copolymères, les copolymères de butadiène et d'un monomère vinylaromatique, plus particulièrement le copolymère de butadiène-styrène (SBR), sont particulièrement préférés.

L'élastomère diénique constituant une partie de la matrice élastomérique selon l'invention peut être étoilé, couplé, fonctionnalisé ou non, de manière connue en soi, au moyen d'agents de fonctionnalisation, de couplage ou d'étoilage connus de l'homme de l'art. On peut par exemple citer parmi d'autres plus classiques, les élastomères couplés selon les procédés décrits dans les demandes au nom des Demanderesses WO 08/141702, FR 2 2910 64, FR 2 291 065 et FR 07/60442.

La composition de caoutchouc selon l'invention comprend au moins trois composés, dont une charge renforçante dans des proportions allant de 35 à 200 pce. De manière préférentielle, le taux de charge renforçante totale est compris entre 40 et 140 pce, plus préférentiellement entre 50 et 130 pce, l'optimum étant de manière connue différent selon les applications particulières du pneumatique visées; le niveau de renforcement attendu sur un pneumatique vélo, par exemple, est bien sûr inférieur à celui exigé sur un pneumatique apte à rouler à grande vitesse de manière soutenue, par exemple un pneumatique moto, un pneumatique pour véhicule de tourisme ou pour véhicule utilitaire tel que Poids lourd.

La charge renforçante est constituée d'une charge organique renforçante telle que du noir de carbone ou d'une charge inorganique renforçante, telle que de la silice renforçante, dans des proportions allant de 0 à 100% en poids du poids total de la charge, ou d'un coupage charge organique /charge inorganique selon l'application visée. La proportion de charge organique ou inorganique est respectivement préférentiellement supérieure ou égale à 50% en poids du poids total de la charge, plus particulièrement supérieure à 55% selon l'application visée. La seconde charge renforçante contenue en coupage (mélange) de la charge renforçante majoritaire est alors préférentiellement présente selon une fraction pondérale inférieure à 50 % par rapport au poids total de la charge.

Par "charge inorganique renforçante", doit être entendu dans la présente demande, par définition, toute charge inorganique ou minérale quelles que soient sa couleur et son origine (naturelle ou de synthèse), encore appelée charge "blanche", charge "claire" voire "charge non noire" ("non-black filler") par opposition à une charge organique conventionnelle telle que du noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, même si les silices précipitées hautement dispersibles sont préférées. A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

Comme charge organique renforçante conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, mais aussi des noirs plus grossiers comme par exemple les noirs N550 ou N683. Les noirs de carbone pourraient être par exemple déjà incorporés au caoutchouc naturel sous la forme d'un masterbatch.

Les coupages noir/ silice ou les noirs partiellement ou intégralement recouverts de silice conviennent pour constituer la charge renforçante. Conviennent également les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Comme exemples de charges organiques renforçantes autres que des noirs de carbone, on peut citer les charges organiques de polyvinylaromatique fonctionnalisé telles que décrites dans les demandes WO-A-2006/069792 et WO-A-2006/069793, ou encore les charges organiques de polyvinyl non aromatique fonctionnalisé telles que décrites dans les demandes WO-A-2008/003434 et WO-A-2008/003435.

Dans le cas où la charge renforçante ne contient qu'une charge inorganique renforçante majoritaire et du noir de carbone, la fraction pondérale de ce noir de carbone dans ladite charge renforçante est plus préférentiellement choisie inférieure ou égale à 30 % par rapport au poids total de la charge renforçante.

Dans le cas où la charge renforçante contient une charge inorganique renforçante, la composition de caoutchouc selon l'invention comprend au moins quatre composés, dont un agent de couplage pour coupler la charge inorganique renforçante au caoutchouc naturel et aux éventuels élastomères diéniques qui composent la matrice élastomérique.

Par agent de couplage, on entend plus précisément un agent apte à établir une liaison suffisante de nature chimique et/ou physique entre la charge considérée et l'élastomère, tout en facilitant la dispersion de cette charge au sein de la matrice élastomère. Un tel agent de liaison, au moins bifonctionnel, a par exemple comme formule générale simplifiée " Y-T-X' ", dans laquelle :
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (-OH) de surface de la charge inorganique (par exemple les silanols de surface lorsqu'il s'agit de silice);
- X' représente un groupe fonctionnel (fonction " X' ") capable de se lier physiquement et/ou chimiquement à l'élastomère, par exemple par l'intermédiaire d'un atome de soufre;
- T représente un groupe divalent permettant de relier Y et X'.

Des agents dits de recouvrement des particules de charge inorganique peuvent également être utilisés. Ils sont susceptibles d'améliorer encore, en se liant aux sites fonctionnels de surface de la charge inorganique et en la recouvrant ainsi au moins partiellement, la dispersion de cette dernière dans la matrice élastomérique, abaisser ainsi sa viscosité à cru et améliorer globalement sa mise en oeuvre à l'état cru.

De tels agents de recouvrement appartiennent essentiellement à la famille des polyols (par exemple des diols, des triols tels que glycérol ou ses dérivés), des polyéthers (par exemple des polyethylène-glycols), des amines primaires, secondaires ou tertiaires (par exemple des trialcanol-amines), des polyorganosiloxanes hydroxylés ou hydrolysables, par exemple des α,ω-dihydroxy-polyorganosilanes (notamment des α,ω-dihydroxy-polydiméthylsiloxanes), des hydroxysilanes, des alkylalkoxysilanes, notamment des alkyltriéthoxysilanes comme par exemple le 1-octyl-triéthoxysilane commercialisé par la société Degussa-Evonik sous la dénomination « Dynasylan Octeo ». Ces agents de recouvrement sont bien connus en compositions de caoutchouc pour pneumatique renforcées d'une charge inorganique ; ils ont été décrits, par exemple, dans les demandes de brevet WO 00/05300, WO 01/55252, WO 01/96442, WO 02/031041, WO 02/053634, WO 02/083782, WO 03/002648, WO 03/002653, WO 03/016387, WO 2006/002993, WO 2006/125533, WO 2007/017060 et WO 2007/003408.

Les agents de liaison ne doivent pas être confondus avec de simples agents de recouvrement de la charge considérée qui, de manière connue, peuvent comporter la fonction Y active vis-à-vis de la charge mais sont dépourvus de la fonction X' active vis-à-vis de l'élastomère. On peut utiliser tout agent de liaison connu pour, ou susceptible d'assurer efficacement dans les compositions de caoutchouc utilisables pour la fabrication de pneumatiques, la liaison (ou le couplage) entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X' et Y précitées. Des agents de liaison silice/élastomère, notamment, ont été décrits dans un grand nombre de documents, les plus connus étant des alkoxysilanes bifonctionnels tels que des alkoxysilanes polysulfurés. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevet WO 02/30939 (ou US 6,774,255) et WO 02/31041 (ou US 2004/051210), ou encore des silanes ou POSS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple d'autres silanes porteurs au moins d'une fonction thiol (SH) (dits mercaptosilanes) et/ou d'au moins une fonction thiol bloquée, tels que décrits par exemple dans les brevets ou demandes de brevet US 6849754, WO 99/09036, WO 2006/023815, WO 2007/098080.

Bien entendu pourraient être également utilisés des mélanges des agents de couplage précédemment décrits, comme décrit notamment dans la demande WO 2006/125534.

Dans les compositions conformes à l'invention, le taux d'agent de couplage est avantageusement inférieur à 20 pce. Son taux est préférentiellement compris entre 0,5 et 12 pce, plus préférentiellement de 3 à 10 pce, en particulier de 4 à 7 pce. Ce taux est aisément ajusté par l'homme du métier selon le taux de charge inorganique utilisé dans la composition.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, comme par exemple à titre non limitatif, les charges qui sont commercialisées par la société CABOT sous la dénomination « CRX 2000 », et qui sont décrites dans le document de brevet international WO-A-96/37547, ou bien comporterait à sa surface des sites fonctionnels, notamment hydroxyles, nécessitant l'utilisation d'un agent de couplage pour établir la liaison entre la charge et l'élastomère.

Les compositions de caoutchouc conformes à l'invention peuvent également contenir, en complément des agents de couplage, des activateurs de couplage, des agents de recouvrement des charges inorganiques comme décrits ci-dessus, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru..

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxydes et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters (par exemple les trioléates de glycérol), les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés.

L'invention concerne également un procédé de préparation d'une composition de caoutchouc telle que décrite précédemment.

La composition est fabriquée dans des mélangeurs appropriés, en utilisant deux phases de préparation successives bien connues de l'homme du métier : (i) une première phase de travail ou malaxage thermomécanique (phase dite "non-productive") à haute température, jusqu'à une température maximale comprise entre 130°C et 200°C, de préférence entre 145°C et 185°C, suivie (ii) d'une seconde phase de travail mécanique (phase dite "productive") jusqu'à une plus basse température, typiquement inférieure à 110°C, par exemple entre 40°C et 100°C, encore dite phase de finition, au cours de laquelle est incorporé le système de réticulation. Par système de réticulation, on entend indifféremment les agents de réticulation utilisés conventionnellement avec les charges inorganiques et les agents de vulcanisation conventionnellement utilisés tels que le soufre et les accélérateurs de vulcanisation.

A titre d'exemple, la première phase (non-productive) est conduite en une seule étape thermomécanique au cours de laquelle on introduit dans un mélangeur approprié tel qu'un mélangeur interne, dans un premier temps à une température comprise entre 55°C et 80°C, par exemple de l'ordre de 70°C, le ou les élastomères diéniques et la charge renforçante, , puis dans un second temps à une température comprise entre 80°C et 110°C, par exemple de l'ordre de 90°C, les éventuels agents de mise en oeuvre et les autres additifs, à l'exception de l'oxyde de zinc, du système de réticulation ou vulcanisation et du composé poly-imine, puis dans un troisième temps à une température comprise entre 110°C et 150°C, par exemple à 140°C, l'oxyde de zinc. La durée totale du malaxage, dans cette phase non-productive, est de préférence comprise entre 2 et 6 minutes avec une température de tombée de l'ordre de 165°C.

Après refroidissement du mélange ainsi obtenu, on incorpore à une température comprise entre 20°C et 50°C, par exemple de l'ordre de 30°C, le système de vulcanisation et le composé poly-imine au fort taux précité, généralement dans un mélangeur externe tel qu'un mélangeur à cylindre ; le tout est alors mélangé (phase productive) pendant quelques minutes, par exemple entre 2 et 6 minutes.

Le procédé conforme à l'invention pour préparer une composition de caoutchouc selon l'invention comporte au moins les étapes suivantes :
- la réalisation, à une température maximale comprise entre 130 °C et 200 °C, de préférence entre 145°C et 185°C, d'un premier temps de travail thermomécanique (parfois qualifié de phase " non productive") pendant une durée comprise de préférence entre 2 et 6 minutes, des constituants de base nécessaires de la composition de caoutchouc, à l'exception du système de réticulation et du composé poly-imine, par incorporation de manière intime, par malaxage en une ou plusieurs étapes, à la matrice élastomère à base de caoutchouc naturel, de constituants de la composition, puis
- la réalisation, à une température inférieure à ladite température maximale dudit premier temps, de préférence inférieure à 110 °C (parfois qualifié de phase "productive"), pendant une durée comprise de préférence entre 2 et 6 minutes, d'un second temps de travail mécanique, avantageusement sur outil à cylindres, au cours duquel est incorporé ledit système de réticulation et le composé poly-imine au fort taux précité.

Il convient de noter que, selon le procédé conforme à l'invention, le composé poly-imine incorporé dans la composition doit être incorporé à un fort taux, c'est-à-dire un taux allant de 6 à 20 mmol pour 100g d'élastomère et préférentiellement un taux allant de 6 à 16 mmoles.

La composition finale ainsi obtenue peut ensuite être calandrée, par exemple sous la forme d'une feuille, d'une plaque ou encore extrudée, par exemple pour former un profilé de caoutchouc utilisable comme produit semi- fini en caoutchouc destiné au pneumatique.

L'invention a également pour objet un pneumatique qui incorpore dans au moins un de ses éléments constitutifs une composition de caoutchouc renforcée selon l'invention.

L'invention a tout particulièrement pour objet un produit semi-fini en caoutchouc comprenant une composition de caoutchouc renforcée selon l'invention, destiné à ces pneumatiques.

En raison de l'hystérèse réduite qui caractérise une composition de caoutchouc selon l'invention et de sa moindre dégradation dans le temps par rapport à celle d'une composition dépourvue de composé poly-imine, on notera qu'un pneumatique dont la bande de roulement comprend la composition selon l'invention présente une résistance au roulement avantageusement réduite au cours de la vie dudit pneumatique.

En raison de l'hystérèse réduite qui caractérise une composition de caoutchouc selon l'invention et de sa moindre dégradation dans le temps par rapport à celle d'une composition dépourvue de composé poly-imine, on notera également qu'un pneumatique dont les flancs ou tout ou partie des compositions internes comprennent la composition de l'invention présente un auto-échauffement et une thermo-oxydation significativement réduits, et par conséquent une endurance améliorée. On entend par compositions internes les compositions destinées à la fabrication des nappes d'armature de sommet, des nappes d'armature de carcasse, des bourrelets, des protecteurs, des sous-couches, des blocs de caoutchouc et autres gommes internes, notamment les gommes de découplage, destinés à assurer la liaison ou l'interface entre les zones précitées des pneumatiques.

Les pneumatiques conformes à l'invention sont notamment destinés à des véhicules tourisme, à des véhicules industriels choisis parmi les camionnettes, "Poids- lourd" - i.e., métro, bus, engins de transport routier (camions, tracteurs, remorques), véhicules hors-la-route, engins agricoles ou de génie civil, avions, autres véhicules de transport ou de manutention.

Les caractéristiques précitées de la présente invention, ainsi que d'autres, seront mieux comprises à la lecture de la description suivante de plusieurs exemples de réalisation de l'invention, donnés à titre illustratif et non limitatif.

### I. MESURES ET TESTS UTILISES

Les compositions de caoutchouc sont caractérisées avant et après cuisson, comme indiqué ci-après.

### 1-Rhéométrie

Les mesures sont effectuées à 150°C avec un rhéomètre à chambre oscillante, selon la norme DIN53529 - partie 3 (juin 1983). L'évolution du couple rhéométrique en fonction du temps, décrit l'évolution de la rigidité de la composition par suite de la réaction de vulcanisation. Les mesures sont traitées selon la norme DIN53539 - partie 2 (mars 1983) : tᵢ est le délai d'induction, c'est-à-dire le temps nécessaire au début de la réaction de vulcanisation ; t_{α} (par exemple t₉₉) est le temps nécessaire pour atteindre une conversion de α% (par exemple 99%) de l'écart entre les couples minimum et maximum.

### 2-Essais de traction

Ces essais permettent de déterminer les contraintes d'élasticité et les propriétés à la rupture. Sauf indications différentes, ils sont effectués conformément à la norme française NF T 46-002 de septembre 1988. On mesure en seconde élongation (i.e. après un cycle d'accommodation) les modules sécants nominaux (ou contraintes apparentes, en MPa) à 10% d'allongement (notés E10), 100% d'allongement (notés E100) et 300% d'allongement (notés E300). Toutes ces mesures de traction sont effectuées dans les conditions normales de température (23+-2°C) et d'hygrométrie (50+-5% d'humidité relative), selon la norme française NF T 40-101 (décembre 1979). On mesure aussi les contraintes à la rupture (en MPa) et les allongements à la rupture (en %) à 23°C.

3 - Les pertes hystérétiques (P60) sont mesurées par rebond à 60°C en %. La déformation pour les pertes mesurées est de 35%. L'évolution de l'hystérèse est appréciée en effectuant la mesure de la perte hystérétique à l'état initial après réticulation de la composition puis respectivement après 7, 14 et 21 jours de vieillissement de ladite composition. Les valeurs consignées dans les tableaux sont des unités relatives (u.r.) établies sur une base 100 attribuée à la valeur mesurée à l'état initial du mélange témoin. Toute augmentation de valeur indique une évolution pénalisante de l'hystérèse.

### II. EXEMPLES DE REALISATION DE L'INVENTION

Les exemples de réalisation ont pour but de comparer les propriétés d'une composition conforme à l'invention comportant un composé poly-imine à fort taux et préparée selon le procédé conforme à l'invention à une autre composition identique mais ne comportant pas de composé poly-imine. Le mode opératoire de réalisation des compositions est le même pour toutes les compositions testées.

Les exemples 1 à 3 montrent les propriétés améliorées (hystérèse) d'une composition conforme à l'invention lorsque la charge renforçante est à 100% une charge organique comme le noir de carbone.

### Exemple 1

Les compositions testées présentent la formulation suivante (exprimée en pce : parties pour cent parties d'élastomère):

**Tableau 1**

| Compositions N° | C1 | C-2 |
|---|---|---|
| | | |
| Elastomère diénique (1) | 100 | 100 |
| Charge (2) | 50 | 50 |
| Anti oxydant (3) | 2 | 2 |
| Poly-imine (4) | 0 | 4,2 |
| ZnO (5) | 4 | 4 |
| Acide stéarique (6) | 2.5 | 2,5 |
| Accélérateur (7) | 1 | 1 |
| Soufre | 4 | 4 |

| | | |
|---|---|---|
| *(1) = Caoutchouc naturel* *(2) = noir de carbone N330* *(3) = N-(1,3-diméthylbutyl)-N'-phényl-p-phénylènediamine ("Santoflex 6-PPD » de la société Flexsys)* *(4)=N,N-Bis(4-methylpentan-2-ylidene)hexane-1,6-diamine de formule* 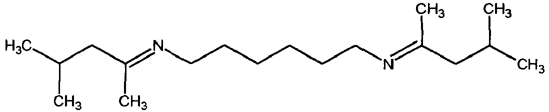 *(5) =grade industriel de la société Umicore* *(6) = "Pristerene 493 1 » de la société Uniquema* *(7)= N-cyclohexyl-2-benzothiazylsulfénamide ("Santocure DBCS" de la société Flexsys)* | | |

Le composé (4) N,N'-Bis(4-méthylpentan-2-ylidene)hexane-1,6-diamine est préparé selon le procédé suivant: dans un ballon équipé d'un condenseur à reflux de type Dean Stark et d'un système d'agitation, on introduit 29g (0,25 mole) d'hexaméthylènediamine et 250g (2,5 mole) de 4-méthylpentan-2-one. Le milieu réactionnel est porté à reflux jusqu'à récupération par distillation de 0,5 mole d'eau (9mL). Le milieu réactionnel est ensuite refroidi jusqu'à température ambiante et l'excès de cétone est distillé à 80°C sous 40 mbar. 4,2 pce de N,N'-Bis(4-méthylpentan-2-ylidene)hexane-1,6-diamine correspond à 15 mmol de di-imine pour 100g d'élastomère.

Chacune des compositions est réalisée, dans un premier temps, par un travail thermomécanique, puis, dans un second temps de finition, par un travail mécanique.

On introduit successivement, dans un mélangeur interne de laboratoire de type 'Banbury', dont la capacité est de 400 cm3, qui est rempli à 75% et dont la température initiale est d'environ 70°C, l'élastomère et le noir de carbone, à 90°C, l'acide stéarique et l'antioxydant. L'oxyde de zinc est introduit à 140°C.

On conduit l'étape de travail thermomécanique pendant 3 à 5 minutes, jusqu'à une température maximale de tombée de 165°C environ.

Le premier temps précité de travail thermomécanique est ainsi réalisé, étant précisé que la vitesse moyenne des palettes lors de ce premier temps est de 90 tr/min.

On récupère le mélange ainsi obtenu, on le refroidit puis, dans un mélangeur externe (homo-finisseur), on ajoute le soufre, la sulfénamide et la poly-imine dans la composition C-2 à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés avant et après cuisson.

Les compositions ainsi obtenues peuvent également être extrudées sous la forme de profilés directement utilisables, après découpage et/ou assemblage aux dimensions souhaitées, par exemple comme produits semi-finis pour pneumatiques.

Résultats obtenus :

**Tableau 2**

| Composition N° : | C-1 | C-2 |
|---|---|---|
| *Propriétés avant cuisson:* | | |
| t₉₉ - tᵢ (min) | 14 | 7,3 |
| | | |

| *Propriétés après cuisson:* | | |
|---|---|---|
| E10 (MPa) | 6,5 | 5,7 |
| | | |
| E100 (MPa) | 3,6 | 2,2 |
| E300 (MPa) | 4,5 | 2,6 |

| Indice de cassage Scott à 23°C | | |
|---|---|---|
| contrainte rupture (MPa) | 27 | 29 |
| allongement rupture (%) | 378 | 540 |
| | | |

| *Evolution de l'hystérèse (P60)* | | |
|---|---|---|
| Etat initial (u.r.) | 100 | 104 |
| Après vieillissement 7j (u.r.) | 107 | 97 |
| Après vieillissement 14j (u.r.) | 114 | 102 |
| Après vieillissement 21 j (u.r.) | 117 | 109 |

On constate au niveau des propriétés à l'état vulcanisé, que la composition C-2 conforme à l'invention et comprenant, à un fort taux, la N,N' -Bis(4-méthylpentan-2-ylidene)hexane-1,6-diamine, présente une moindre dégradation de l'hystérèse dans le temps que celle du mélange témoin dépourvu de poly-imine sans significativement dégrader les autres propriétés. Un mélange traité par la di-imine et vieilli 21 jours possède un niveau d'hystérèse légèrement supérieur à celui du mélange témoin C-1 vieilli 7 jours et très nettement inférieur à celui du mélange témoin C-1 vieilli 21 jours, ce qui est une amélioration significative.

### Exemple 2

Les compositions testées présentent la formulation suivante (exprimée en pce : parties pour cent parties d'élastomère) :

**Tableau 3**

| Compositions N° | C-1 | C-2 |
|---|---|---|
| | | |
| Elastomère diénique (1) | 100 | 100 |
| Charge (2) | 50 | 50 |
| Anti oxydant (3) | 2 | 2 |
| Poly-imine (4) | 0 | 2,1 |
| ZnO (5) | 4 | 4 |
| Acide stéarique (6) | 2,5 | 2,5 |
| Accélérateur (7) | 1 | 1 |
| Soufre | 4 | 4 |

| | | |
|---|---|---|
| *(1) = Caoutchouc naturel* *(2) = noir de carbone N330* *(3) = N-(1,3-diméthylbutvl)-N'-phényl-p-phénylènediamine phénylènediamine ("Santoflex 6-PPD » de la société Flexsys)* *(4)=N,N'-Bis(4-methylpentan-2-ylidene)cyclohexane-1,4-diamine de formule* 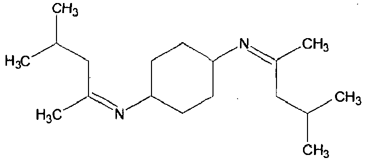 *(5)=grade industriel de la société Umicore* *(6)* = *"Pristerene 4931 » de la société Uniquema* *(7)= N-cyclohexyl-2-benzothiazylsulfénamide (*"*Santocure DBCS" de la société Flexsys)* | | |

Le composé (4) N,N-Bis(4-methylpentan-2-ylidene)cyclohexane-1,4-diamine est préparé selon le procédé suivant: dans un ballon équipé d'un condenseur à reflux de type Dean Stark et d'un système d'agitation, on introduit 27g (0,25 mole) de 1,4-diaminocyclohexane et 250g (2,5 mole) de 4-methylpentan-2-one. Le milieu réactionnel est porté à reflux jusqu'à récupération par distillation de 0.5 mole d'eau (9mL). Le milieu réactionnel est ensuite refroidi jusqu'à température ambiante et l'excès de cétone est distillé à 60°C sous 40 mbar.

2,1 pce de N,N-Bis(4-methylpentan-2-ylidene)cyclohexane-1,4-diamine correspond à 7.5 mmol de di-imine pour 100g d'élastomère.

Résultats obtenus :

**Tableau 4**

| Composition N°: | C-1 | C-2 |
|---|---|---|
| *Propriétés avant cuisson:* | | |
| t₉₉ - tᵢ (min) | 17 | 15 |
| | | |

| *Propriétés après cuisson:* | | |
|---|---|---|
| E10 (MPa) | 6,7 | 6,3 |
| E100 (MPa) | 3,8 | 3,0 |
| E300 (MPa) | 4,7 | 3,6 |

| Indice de cassage Scott à 23°C | | |
|---|---|---|
| contrainte rupture (MPa) | 27 | 29 |
| allongement rupture (%) | 345 | 449 |
| | | |

| *Evolution de l'hystérèse(P60)* | | |
|---|---|---|
| Etat initial (u.r.) | 100 | 100 |
| Après vieillissement 7j (u.r.) | 112 | 103 |
| Après vieillissement 14j (u.r.) | 123 | 107 |
| Après vieillissement 21j (u.r.) | 133 | 120 |

On observe que la composition C-2 conforme à l'invention et comprenant, à un fort taux, la N,N-Bis(4-methylpentan-2-ylidene)cyclohexane-1,4-diamine, présente une moindre dégradation de l'hystérèse dans le temps que celle du mélange témoin C-1 dépourvu de polyimine sans significativement dégrader les autres propriétés. Un mélange traité par la di-imine et vieilli 21 jours possède un niveau d'hystérèse légèrement inférieur à celui du mélange témoin C-1 vieilli 14 jours et très nettement inférieur à celui du mélange témoin C-1 vieilli 21 jours, ce qui est une amélioration significative.

### Exemple 3

Les compositions testées présentent la formulation suivante (exprimée en pce : parties pour cent parties d'élastomère) :

**Tableau 5**

| Compositions N° | C-1 | C-2 |
|---|---|---|
| | | |
| Elastomère diénique (1) | 100 | 100 |
| Charge (2) | 50 | 50 |
| Anti oxydant (3) | 2 | 2 |
| Poly-imine (4) | 0 | 2,1 |
| ZnO (5) | 4 | 4 |
| Acide stéarique (6) | 2,5 | 2,5 |
| Accélérateur (7) | 1 | 1 |
| Soufre | 4 | 4 |

| | | |
|---|---|---|
| *(1) = Caoutchouc naturel* *(2) = noir de carbone N330* *(3) = N-(1,3-diméthylbutyl)-N'-phényl-p-phénylènediamine ("Santoflex 6-PPD » de la société Flexsys)* *(4)-N,N-Bis(4-methylpentan-2-ylidene)cyclohexane-1,2-diamine de formule* 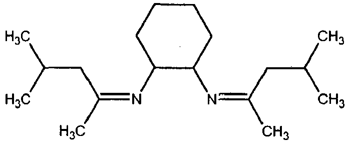 *(5) =grade industriel de la société Umicore* *(6)* = *"Pristerene 4931 » de la société Uniquema* *(7)= N-cyclohexyl-2-benzothiazylsulfénamide ("Santocure DBCS" de la société Flexsys)* | | |

Le composé (4) N,N-Bis(4-methylpentan-2-ylidene)cyclohexane-1,2-diamine est préparé selon le procédé suivant: dans un ballon équipé d'un condenseur à reflux de type Dean Stark et d'un système d'agitation, on introduit 27g (0,25 mole) de 1,2-diaminocyclohexane et 250g (2,5 mole) de 4-methylpentan-2-one. Le milieu réactionnel est porté à reflux jusqu'à récupération par distillation de 0,5 mole d'eau (9mL). Le milieu réactionnel est ensuite refroidi jusqu'à température ambiante et l'excès de cétone est distillé à 60°C sous 40 mbar.

2,1 pce de N,N'-Bis(4-methylpentan-2-ylidene)cyclohexane-1,2-diamine correspond à 7.5 mmol de di-imine pour 100g d'élastomère.

Résultats obtenus :

**Tableau 6**

| Composition N°: | C-1 | C-2 |
|---|---|---|
| *Propriétés avant cuisson:* | | |
| t₉₉ - tᵢ (min) | 17 | 13 |
| | | |

| *Propriétés après cuisson:* | | |
|---|---|---|
| E10 (MPa) | 6,7 | 7,0 |
| E100 (MPa) | 3,8 | 3,8 |
| E300 (MPa) | 4,7 | 4,4 |

| Indice de cassage Scott à 23°C | | |
|---|---|---|
| contrainte rupture (MPa) | 27 | 27 |
| allongement rupture (%) | 345 | 371 |
| | | |

| *Evolution de l'hystérèse(P60)* | | |
|---|---|---|
| Etat initial (u.r.) | 100 | 103 |
| Après vieillissement 7j (u.r.) | 112 | 108 |
| Après vieillissement 14j (u.r.) | 123 | 116 |
| Après vieillissement 21j (u.r.) | 133 | 123 |

On observe que la composition C-2 conforme à l'invention comportant la N,N'-Bis(4-methylpentan-2-ylidene)cyclohexane-1,2-diamine, présente une moindre dégradation de l'hystérèse dans le temps que celle du mélange témoin C-1 dépourvu de poly-imine sans significativement dégrader les autres propriétés. Un mélange traité par la di-imine et vieilli 21 jours possède le même niveau d'hystérèse que le mélange témoin C-1 vieilli 14 jours. Ce niveau d'hystérèse est très nettement inférieur à celui du mélange témoin C-1 vieilli 21 jours, ce qui est une amélioration significative.

## Revendications

1. Composition de caoutchouc renforcée à base au moins (a) d'une matrice élastomérique comprenant du caoutchouc naturel, (b) d'une charge renforçante, (c) d'un composé polyimine répondant aux formules 1 ou 2 suivantes: 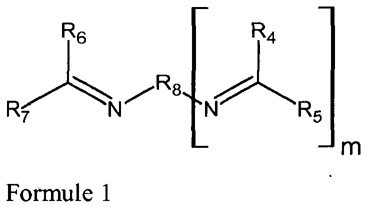 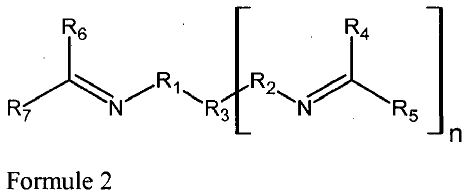 dans lesquelles :
- R₄, R₅, R₆, R₇, identiques ou différents, sont choisis parmi les groupements alkyls ayant de 1 à 20 atomes de carbone, cycloalkyls ayant de 5 à 24 atomes de carbone, aryls ayant de 6 à 18 atomes de carbone ou aralkyls ayant de 7 à 25 atomes de carbone;
- R₁, R₂, identiques ou différents, sont choisis dans le groupe constitué par les alkylidènes ayant de 1 à 20 atomes de carbone, les cycloalkylidènes ayant de 5 à 24 atomes de carbone, les arylidènes ayant de 6 à 18 atomes de carbone, les aralkylidènes ayant de 7 à 25 atomes de carbone et les hétérocycles, identiques ou différents, ayant de 4 à 25 atomes de carbone;
- R₃, R₈, identiques ou différents, sont choisis dans le groupe constitué par les alkylidènes ayant de 1 à 20 atomes de carbone, les alkylidynes ayant de 1 à 20 atomes de carbone, les alkylylidynes ayant de 1 à 20 atomes de carbone, les cycloalkylidènes ayant de 5 à 24 atomes de carbone, les cycloalkylidynes ayant de 5 à 24 atomes de carbone, les cycloalkylylidynes ayant de 5 à 24 atomes de carbone, les arylidènes ayant de 6 à 18 atomes de carbone, les arylidynes ayant de 6 à 18 atomes de carbone, les arylylidynes ayant de 6 à 18 atomes de carbone, les aralkylidènes ayant de 7 à 25 atomes de carbone, les aralkylidynes ayant de 6 à 18 atomes de carbone, les aralkylylidynes ayant de 6 à 18 atomes de carbone, et les hétérocycles, identiques ou différents, ayant de 4 à 25 atomes de carbone;
- R₃ comporte éventuellement un ou plusieurs hétéroatome(s) choisi(s) parmi O, N, S et Si.
- m est égal à 1, 2 ou 3
- n est égal à 1, 2 ou 3

2. Composition de caoutchouc selon la revendication 1, **caractérisée en ce que** le composé poly-imine est présent dans une proportion comprise allant de 6 à 20 mmol pour 100g d'élastomère, préférentiellement allant de 6 à 16 mmol pour 100g d'élastomère.

3. Composition de caoutchouc selon la revendication 1 ou 2, **caractérisée en ce que** la fraction pondérale du caoutchouc naturel dans la matrice élastomérique est supérieure ou égale à 50% en poids du poids total de la matrice.

4. Composition de caoutchouc selon la revendication 3, **caractérisée en ce que** la matrice élastomérique est constituée à 100% de caoutchouc naturel.

5. Composition de caoutchouc selon l'une quelconque des revendications 1 à 4, **caractérisée en ce que** la charge renforçante comprend une charge organique, par exemple du noir de carbone, dans une proportion de 100% en poids du poids total de la charge.

6. Composition de caoutchouc selon l'une quelconque des revendications 1 à 4, **caractérisée en ce que** la charge renforçante comprend une charge inorganique, par exemple une silice renforçante, et **en ce qu'**elle comporte en outre un agent de couplage.

7. Composition de caoutchouc selon l'une quelconque des revendications 1 à 4 et 6 **caractérisée en ce que** la charge renforçante comprend une charge inorganique renforçante dans des proportions allant de 55% à 100% en poids du poids total de la charge.

8. Composition de caoutchouc selon l'une quelconque des revendications 1 à 7, **caractérisée en ce que** le composé poly-imine est choisi parmi les di-imines, tri-imines et tétra-imines.

9. Composition de caoutchouc selon la revendication 8, **caractérisée en ce que** le composé poly-imine est choisi parmi les N,N'-Bis(4-methylpentan-2-ylidene)hexane-1,6-diamine, N,N'-Bis(2,6-dimethylheptan-4-ylidene)hexane-1,6-diamine, N,N'-Bis(2,4-dimethylpentan-3-ylidene)hexane-1,6-diamine, N,N' -Bis(4-methylpentan-2-ylidene)octane-1,8-diamine, N,N'-Bis(2,6-dimethylheptan-4-ylidene)octane-1,8-diamine, N,N'-Bis(2,4-dimethylpentan-3-ylidene)octane-1,8-diamine, N,N'-dicyclopentylidenehexane-1,6-diamine, N,N'-dicyclopentylideneoctane-1,8-diamine, N,N'-dicyclohexylidenehexane-1,6-diamine, N,N'-dicyclohexylideneoctane-1,8-diamine, N,N'-Bis(4-methylpentan-2-ylidene)cyclohexane-1,4-diamine, N,N'-Bis(4-methylpentan-2-ylidene)cyclohexane-1,2-diamine, N,N'-Bis(2,6-dimethylheptan-4-ylidene)cyclohexane-1,4-diamine, N,N'-Bis(2,6-dimethylheptan-4-ylidene)cyclohexane-1,2-diamine, N,N'-dicyclohexylidenecyclohexane-1,4-diamine, N,N'-dicyclohexylidenecyclohexane-1,2-diamine, N-(4-methylpentan-2-ylidene)-,N',N'-bis((4-methylpentan-2-ylideneamino)ethyl)ethane-1,2-diamine, N-(2,6-dimethylheptan-4-ylidene)-N',N'-bis(2-(2,6-dimethylheptan-4-ylideneamino)ethyl)ethane-1,2-diamine.

10. Procédé de préparation d'une composition de caoutchouc renforcée telle que décrite dans l'une quelconque des revendications 1 à 9, comprenant les étapes suivantes:
(i) la réalisation, à une température maximale comprise entre 130 °C et 200 °C, d'un premier temps de travail thermomécanique des constituants de base nécessaires de la composition de caoutchouc, à l'exception du système de réticulation par incorporation de manière intime, par malaxage, à la matrice élastomérique à base de caoutchouc naturel, d'ingrédients de la composition, puis
(ii) la réalisation, à une température inférieure à ladite température maximale dudit premier temps, de préférence inférieure à 110 °C, d'un second temps de travail mécanique au cours duquel est incorporé ledit système de réticulation,
**caractérisé en ce que**, l'adjonction du composé poly-imine est effectuée au cours de l'étape (ii) précitée.

11. Procédé de préparation selon la revendication 10, **caractérisé en ce que** le composé poly-imine est ajouté à un fort taux allant de 6 à 20 mmol pour 100g d'élastomère, de préférence allant de 6 à 16 mmol pour 100g d'élastomère.

12. Produit semi-fini en caoutchouc pour pneumatique, **caractérisé en ce qu'**il comprend une composition de caoutchouc réticulable ou réticulée selon l'une quelconque des revendications 1 à 9.

13. Pneumatique, **caractérisé en ce qu'**il comporte un produit semi-fini selon la revendication 12.

14. Procédé d'amélioration dans le temps des propriétés d'hystérèse d'un pneumatique, **caractérisé en ce qu'**il comprend l'incorporation, lors de la fabrication de ce pneumatique, d'une composition de caoutchouc renforcée préparée conformément au procédé de la revendication 10 ou 11.

## Patentansprüche

1. Verstärkte Kautschukzusammensetzung auf Basis von mindestens (a) einer elastomeren Matrix, die Naturkautschuk umfasst, (b) eines verstärkenden Füllstoffs, (c) einer Polyiminverbindung, die den folgenden Formeln 1 oder 2 entspricht: 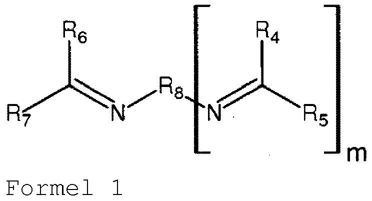 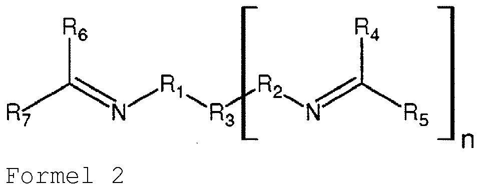 worin:
- R₄, R₅, R₆ und R₇ gleich oder verschieden sind und aus Alkylgruppen mit 1 bis 20 Kohlenstoffatomen, Cycloalkylgruppen 5 bis 24 Kohlenstoffatomen, Arylgruppen mit 6 bis 18 Kohlenstoffatomen oder Aralkylgruppen mit 7 bis 25 Kohlenstoffatomen ausgewählt sind;
- R₁ und R₂ gleich oder verschieden sind und aus der Gruppe bestehend aus Alkylidengruppen mit 1 bis 20 Kohlenstoffatomen, Cycloalkylidengruppen mit 5 bis 24 Kohlenstoffatomen, Arylidengruppen mit 6 bis 18 Kohlenstoffatomen, Aralkylidengruppen mit 7 bis 25 Kohlenstoffatomen und gleichen oder verschiedenen Heterocyclen mit 4 bis 25 Kohlenstoffatomen ausgewählt sind;
- R₃ und R₅ gleich oder verschieden sind und aus der Gruppe bestehend aus Alkylidengruppen mit 1 bis 20 Kohlenstoffatomen, Alkylidingruppen mit 1 bis 20 Kohlenstoffatomen, Alkylylidingruppen mit 1 bis 20 Kohlenstoffatomen, Cycloalkylidengruppen mit 5 bis 24 Kohlenstoffatomen, Cycloalkylidingruppen mit 5 bis 24 Kohlenstoffatomen, Cycloalkylylidingruppen mit 5 bis 24 Kohlenstoffatomen, Arylidengruppen mit 6 bis 18 Kohlenstoffatomen, Arylidingruppen mit 6 bis 18 Kohlenstoffatomen, Arylylidingruppen mit 6 bis 18 Kohlenstoffatomen, Aralkylidengruppen mit 7 bis 25 Kohlenstoffatomen, Aralkylidingruppen mit 6 bis 18 Kohlenstoffatomen, Aralkylylidingruppen mit 6 bis 18 Kohlenstoffatomen und gleichen oder verschiedenen Heterocyclen mit 4 bis 25 Kohlenstoffatomen ausgewählt sind;
- R₃ gegebenenfalls ein oder mehrere Heteroatome, die aus O, N, S und Si ausgewählt sind, umfasst;
- m gleich 1, 2 oder 3 ist;
- n gleich 1, 2 oder 3 ist.

2. Kautschukzusammensetzung nach Anspruch 1, **dadurch gekennzeichnet, dass** die Polyiminverbindung in einem Anteil im Bereich von 6 bis 20 mmol pro 100 g Elastomer, vorzugsweise im Bereich von 6 bis 16 mmol pro 100 g Elastomer, vorliegt.

3. Kautschukzusammensetzung nach Anspruch 1 oder 2, **dadurch gekennzeichnet, dass** der Gewichtsanteil des Naturkautschuks in der elastomeren Matrix größer gleich 50 Gew.-%, bezogen auf das Gesamtgewicht der Matrix, ist.

4. Kautschukzusammensetzung nach Anspruch 3, **dadurch gekennzeichnet, dass** die elastomere Matrix aus 100% Naturkautschuk besteht.

5. Kautschukzusammensetzung nach einem der Ansprüche 1 bis 4, **dadurch gekennzeichnet, dass** der verstärkende Füllstoff einen organischen Füllstoff, zum Beispiel Ruß, in einem Anteil von 100 Gew.-%, bezogen auf das Gesamtgewicht des Füllstoffs, umfasst.

6. Kautschukzusammensetzung nach einem der Ansprüche 1 bis 4, **dadurch gekennzeichnet, dass** der verstärkende Füllstoff einen anorganischen Füllstoff, zum Beispiel ein verstärkendes Siliciumdioxid, umfasst und dass sie außerdem ein Kupplungsmittel enthält.

7. Kautschukzusammensetzung nach einem der Ansprüche 1 bis 4 und 6, **dadurch gekennzeichnet, dass** der verstärkende Füllstoff einen anorganischen verstärkenden Füllstoff in Anteilen im Bereich von 55 bis 100 Gew.-%, bezogen auf das Gesamtgewicht des Füllstoffs, umfasst.

8. Kautschukzusammensetzung nach einem der Ansprüche 1 bis 7, **dadurch gekennzeichnet, dass** die Polyiminverbindung aus Diiminen, Triiminen und Tetraiminen ausgewählt ist.

9. Kautschukzusammensetzung nach Anspruch 8, **dadurch gekennzeichnet, dass** die Polyiminverbindung aus N,N'-Bis(4-methylpentan-2-yliden)hexan-1,6-diamin, N,N'-Bis(2,6-dimethylheptan-4-yliden)hexan-1,6-diamin, N,N'-Bis(2,4-dimethylpentan-3-yliden)-hexan-1,6-diamin, N,N'-Bis(4-methylpentan-2-yliden)octan-1,8-diamin, N,N'-Bis(2,6-dimethyl-heptan-4-yliden)octan-1,8-diamin, N,N'-Bis(2,4-dimethylpentan-3-yliden)octan-1,8-diamin, N,N'-Dicyclopentylidenhexan-1,6-diamin, N,N'-Dicyclo-pentylidenoctan-1,8-diamin, N,N'-Dicyclohexyliden-hexan-1,6-diamin, N,N'-Dicyclohexylidenoctan-1,8-diamin, N,N'-Bis(4-methylpentan-2-yliden)cyclo-hexan-1,4-diamin, N,N'-Bis(4-methylpentan-2-yliden)cyclohexan-1,2-diamin, N,N'-Bis(2,6-dimethylheptan-4-yliden)cyclohexan-1,4-diamin, N,N'-Bis(2,6-dimethylheptan-4-yliden)cyclohexan-1,2-diamin, N,N'-Dicyclohexylidencyclohexan-1,4-diamin, N,N'-Dicyclohexylidencyclohexan-1,2-diamin, N-(4-Methylpentan-2-yliden)-,N',N'-bis((4-methylpentan-2-ylidenamino)ethyl)ethan-1,2-diamin und N-(2,6-Dimethylheptan-4-yliden)-N',N'-bis(2-(2,6-dimethylheptan-4-ylidenamino)ethyl)ethan-1,2-diamin ausgewählt ist.

10. Verfahren zur Herstellung einer verstärkten Kautschukzusammensetzung gemäß einem der Ansprüche 1 bis 9, das die folgenden Stufen umfasst:
(i) Durchführung eines ersten Schritts der thermomechanischen Bearbeitung der notwendigen Grund-bestandteile der Kautschukzusammensetzung mit Aus-nahme des Vernetzungssystems durch inniges Ein-arbeiten von Bestandteilen der Zusammensetzung in die elastomere Matrix auf Basis von Naturkautschuk durch Kneten bei einer Maximaltemperatur zwischen 130°C und 200°C und dann
(ii) Durchführung eines zweiten Schritts der mechanischen Bearbeitung bei einer Temperatur, die unter der Maximaltemperatur des ersten Schritts, vorzugsweise unter 110°C, liegt, in dessen Verlauf das Vernetzungssystem eingearbeitet wird,
**dadurch gekennzeichnet, dass** die Hinzufügung der Polyiminverbindung im Verlauf der obigen Stufe (i) erfolgt.

11. Herstellungsverfahren nach Anspruch 10, **dadurch gekennzeichnet, dass** die Polyiminverbindung in einer hohen Menge im Bereich von 6 bis 20 mmol pro 100 g Elastomer, vorzugsweise im Bereich von 6 bis 16 mmol pro 100 g Elastomer, zugegeben wird.

12. Kautschuk-Halbzeug für Luftreifen, **dadurch gekennzeichnet, dass** es eine vernetzbare oder vernetzte Kautschukzusammensetzung nach einem der Ansprüche 1 bis 9 umfasst.

13. Luftreifen, **dadurch gekennzeichnet, dass** er ein Halbzeug nach Anspruch 12 enthält.

14. Verfahren zur Verbesserung der Hystereseeigenschaften eines Luftreifens im Lauf der Zeit, **dadurch gekennzeichnet, dass** man bei der Herstellung des Luftreifens eine gemäß dem Verfahren von Anspruch 10 oder 11 hergestellte verstärkte Kautschukzusammensetzung einarbeitet.

## Claims

1. Reinforced rubber composition based at least (a) on an elastomeric matrix comprising non-halogenated natural rubber, (b) on a reinforcing filler, (c) on a polyimine compound corresponding to formula 1 or 2 below: 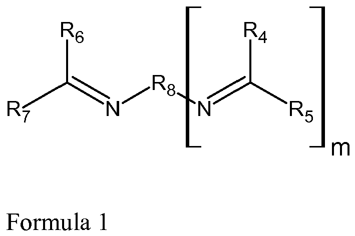 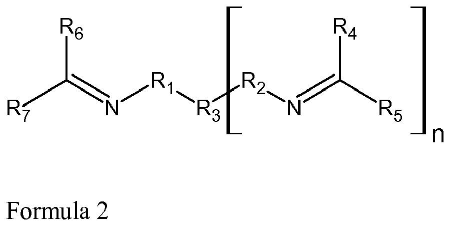 in which:
- R₄, R₅, R₆ and R₇, which are identical or different, are selected from alkyl groups having from 1 to 20 carbon atoms, cycloalkyl groups having from 5 to 24 carbon atoms, aryl groups having from 6 to 18 carbon atoms or aralkyl groups having from 7 to 25 carbon atoms;
- R₁ and R₂, which are identical or different, are selected from the group consisting of alkylidenes having from 1 to 20 carbon atoms, cycloalkylidenes having from 5 to 24 carbon atoms, arylidenes having from 6 to 18 carbon atoms, aralkylidenes having from 7 to 25 carbon atoms and heterocycles, which are identical or different, having from 4 to 25 carbon atoms;
- R₃ and R₈, which are identical or different, are selected from the group consisting of alkylidenes having from 1 to 20 carbon atoms, alkylidynes having from 1 to 20 carbon atoms, alkylylidynes having from 1 to 20 carbon atoms, cycloalkylidenes having from 5 to 24 carbon atoms, cycloalkylidynes having from 5 to 24 carbon atoms, cycloalkylylidynes having from 5 to 24 carbon atoms, arylidenes having from 6 to 18 carbon atoms, arylidynes having from 6 to 18 carbon atoms, arylylidynes having from 6 to 18 carbon atoms, aralkylidenes having from 7 to 25 carbon atoms, aralkylidynes having from 6 to 18 carbon atoms, aralkylylidynes having from 6 to 18 carbon atoms, and heterocycles, which are identical or different, having from 4 to 25 carbon atoms;
- R₃ optionally comprises one or more heteroatom(s), chosen from O, N, S and Si;
- m is equal to 1, 2 or 3;
- n is equal to 1, 2 or 3.

2. Rubber composition according to Claim 1, **characterized in that** the polyimine compound is present in a proportion ranging from 6 to 20 mmol per 100 g of elastomer, preferably ranging from 6 to 16 mmol per 100 g of elastomer.

3. Rubber composition according to Claim 1 or 2, **characterized in that** the weight fraction of natural rubber in the elastomeric matrix is greater than or equal to 50% by weight of the total weight of the matrix.

4. Rubber composition according to Claim 3, **characterized in that** the elastomeric matrix consists of 100% natural rubber.

5. Rubber composition according to any one of Claims 1 to 4, **characterized in that** the reinforcing filler comprises an organic filler, for example carbon black, in a proportion of 100% by weight of the total weight of the filler.

6. Rubber composition according to any one of Claims 1 to 4, **characterized in that** the reinforcing filler comprises an inorganic filler, for example a reinforcing silica, and **in that** it also comprises a coupling agent.

7. Rubber composition according to any one of Claims 1 to 4 and 6, **characterized in that** the reinforcing filler comprises a reinforcing inorganic filler in proportions ranging from 55% to 100% by weight of the total weight of the filler.

8. Rubber composition according to any one of Claims 1 to 7, **characterized in that** the polyimine compound is chosen from diimines, triimines and tetraimines.

9. Rubber composition according to Claim 8, **characterized in that** the polyimine compound is chosen from N,N'-bis(4-methylpentan-2-ylidene)hexane-1,6-diamine, N,N'-bis(2,6-dimethylheptan-4-ylidene)hexane-1,6-diamine, N,N'-bis(2,4-dimethylpentan-3-ylidene)hexane-1,6-diamine, N,N -bis(4-methylpentan-2-ylidene)octane-1,8-diamine, N,N'-bis(2,6-dimethylheptan-4-ylidene)octane-1,8-diamine, N,N'-bis(2,4-dimethylpentan-3-ylidene)octane-1,8-diamine, N,N'-dicyclopentylidenehexane-1,6-diamine, N,N'-dicyclopentylideneoctane-1,8-diamine, N,N'-dicyclohexylidenehexane-1,6-diamine, N,N'-dicyclohexylideneoctane-1,8-diamine, N,N -bis(4-methylpentan-2-ylidene)cyclohexane-1,4-diamine, N,N'-bis(4-methylpentan-2-ylidene)cyclohexane-1,2-diamine, N,N'-bis(2,6-dimethylheptan-4-ylidene)cyclohexane-1,4-diamine, N,N'-bis(2,6-dimethylheptan-4-ylidene)cyclohexane-1,2-diamine, N,N'-dicyclohexylidenecyclohexane-1,4-diamine, N,N'-dicyclohexylidenecyclohexane-1,2-diamine, N-(4-methylpentan-2-ylidene)-,N',N'-bis((4-methylpentan-2-ylideneamino)ethyl)ethane-1,2-diamine and N-(2,6-dimethylheptan-4-ylidene)-N',N'-bis(2-(2,6-dimethylheptan-4-ylideneamino)ethyl)ethane-1,2-diamine.

10. Process for the preparation of a reinforced rubber composition as described in any one of Claims 1 to 9, comprising the following stages:
(i) carrying out, at a maximum temperature of between 130°C and 200°C, a first step of thermomechanical working of the necessary base constituents of the rubber composition, with the exception of the crosslinking system, by intimately incorporating, by kneading, ingredients of the composition in the elastomeric matrix based on natural rubber, then
(ii) carrying out, at a temperature lower than said maximum temperature of said first step, preferably of less than 110°C, a second step of mechanical working during which said crosslinking system is incorporated,
**characterized in that** the addition of the polyimine compound is carried out during the abovementioned stage (ii).

11. Preparation process according to Claim 10, **characterized in that** the polyimine compound is added in a high content ranging from 6 to 20 mmol per 100 g of elastomer and preferably ranging from 6 to 16 mmol per 100 g of elastomer.

12. Tyre semi-finished rubber product, **characterized in that** it comprises a crosslinkable or crosslinked rubber composition according to any one of Claims 1 to 9.

13. Tyre, **characterized in that** it comprises a semi-finished product according to Claim 12.

14. Process for improving, over time, the hysteresis properties of a tyre, **characterized in that** it comprises the incorporation, during the manufacture of this tyre, of a reinforced rubber composition prepared in accordance with Claim 10 or 11.
